# EUROPEAN PATENT APPLICATION

(11) **EP 4 616 924 A1**
(43) Date of publication of application: **17.09.2025**
(21) Application number: 24791868.3
(22) Date of filing: 07.04.2024
(51) Int. Cl.: B01D 35/30, C02F 1/00

(54) **FILTER CARTRIDGE, WATER FEEDING ASSEMBLY, AND WATER PURIFIER**

(30) Priority: 18.04.2023 CN 202310418690; 18.04.2023 CN 202320862924 U; 18.04.2023 CN 202320877349 U; 22.08.2023 CN 202322256816 U; 22.08.2023 CN 202322256963 U
(71) Applicant: Qingdao Ecopure Filter Co., Ltd, Jimo Qingdao, Shandong 266000 (CN)
(72) Inventor: ZOU, Zhibin, Qingdao, Shandong 266000 (CN)
(74) Representative: Studio Torta S.p.A.
(86) International application number: PCT/CN2024/086464
(87) International publication number: WO 2024/217283

(57) **Abstract**

The present invention discloses a water purifying filter, a water supply assembly, and a water purifier. The water purifying filter comprises a filter housing and a filter element, wherein the filter housing is provided with a snap-fitting member, the snap-fitting member comprises a snap-fitting portion, the snap-fitting portion is provided with a first snap-fitting installation structure, a gap is formed between the snap-fitting portion and a sidewall of the filter housing, and the snap-fitting portion can be biased towards the sidewall of the filter housing and be restored. In the present invention, by fitting the snap-fitting member provided on the filter housing with a water purifying filter fitting member, snap-fitting fastening can be achieved once the water purifying filter is installed in place, providing a simple operation, facilitating the installation, detachment, and replacement of the water purifying filter; moreover, the present invention has a simple structure, facilitating production and processing.

## Description

### Cross-Reference to Related Application

The present invention claims the rights of priority of the following Chinese patent applications:
1. Chinese patent application which has a filing date of 18 April 2023 and an application number of 202310418690.1, and is entitled "Kettle and Water Supply Assembly";
2. Chinese patent application which has a filing date of 18 April 2023 and an application number of 202320862924.7, and is entitled "Kettle and Water Supply Assembly";
3. Chinese patent application which has a filing date of 18 April 2023 and an application number of 202320877349.8, and is entitled "Kettle, Water Supply Assembly, and Water Purifying Filter";
4. Chinese patent application which has a filing date of 22 August 2023 and an application number of 202322256816.8, and is entitled "Water Supply Assembly and Water Purifier"; and
5. Chinese patent application which has a filing date of 22 August 2023 and an application number of 202322256963.5, and is entitled "Water Purifier and Water Supply Assembly".

The inventions of the five patent applications herein above are incorporated herein by reference in their entirety.

### Technical Field

The present invention relates to the technical field of water purification apparatuses, and in particular, to a water purifying filter, a water supply assembly, and a water purifier.

### Background

With the development of society, users have higher and higher requirements for drinking water. At present, the quality of tap water is poor; and when users need to drink tap water directly, harmful substances in the tap water will directly enter the human body and cause a certain degree of harm to human health.

Accordingly, water purification apparatuses are increasingly popular. An existing water purification apparatus placed on a table has a pump to provide power so as to control raw water to flow through a water purifying filter for filtering and then to be discharged via a water outlet. In the existing water purification apparatus, a pump and a water purifying filter are separately mounted in the water purification apparatus, resulting in a low degree of integration, an incompact structure, and a large volume. In addition, due to the installation positions of the pump and the water purifying filter, water path connection is complicated, resulting in inconvenient assembly.

The information hereinabove disclosed in the Background is only for enhancement of understanding of the background of the present invention, and therefore it may include information that does not constitute prior art known to a person skilled in the art.

### Summary

The main object of the present invention is to provide a water purification device, for solving the problem of low water purification efficiency of a faucet water purifier in the related art.

In order to achieve the object hereinabove, the present invention provides a water purifying filter, including a filter housing and a filter element, wherein the filter housing is provided with a snap-fitting member, the snap-fitting member is provided with a snap-fitting portion, the snap-fitting member is provided with a first snap-fitting installation structure, a gap is formed between the snap-fitting portion and a sidewall of the filter housing, and the snap-fitting portion is configured to optionally be elastically deflect towards the sidewall of the filter housing and be reset.

Further, a clearance recess for providing clearance for the snap-fitting member is provided on the filter housing at a position corresponding to the snap-fitting member.

Further, the snap-fitting member includes a connecting portion for connecting the filter housing with the snap-fitting portion, the connecting portion being arranged at an angle with respect to the snap-fitting portion.

Further, the connecting portion is provided on the sidewall of the filter housing at a position close to an end portion of the filter housing.

Further, a force applying region is provided on the snap-fitting portion.

Further, the snap-fitting member includes a connecting portion for connecting the filter housing with the snap-fitting portion, and the force applying region is located between the first snap-fitting installation structure and the connecting portion.

According to another aspect of the present invention, provided is a water supply assembly, including a water supply device housing and a water purifying filter located in the water supply device housing, wherein the water purifying filter is the water purifying filter, and a second snap-fitting installation structure cooperating with the first snap-fitting installation structure is provided on an inner side of the water supply device housing.

Further, the snap-fitting portion is provided with a force applying region, and a through hole or a notch groove for exposing the force applying region is provided on the water supply device housing.

Further, the water supply assembly includes a water outlet spout, and a plurality of water outlet ribs are provided in the water outlet spout.

According to another aspect of the present invention, provided is a water purifier, including a water tank and a water supply assembly, wherein the water supply assembly is the described water supply assembly.

According to another aspect of the present invention, provided is a water purifier, a water supply assembly, including: a water supply device housing; a pump module, connected with a pump water inlet pipe and a pump water outlet pipe; and a water outlet spout; and the water supply assembly further includes: a filter module, provided in the water supply device housing, a water inlet of the filter module being connected with the pump water outlet pipe, and a water outlet of the filter module connected with the water outlet spout.

Further, the filter module includes the described water purifying filter.

Further, the filter module includes a water purifying filter and a water purifying filter connector; the water purifying filter is detachably mounted in the water supply device housing and connected with the water purifying filter connector; the water purifying filter connector includes a water purifying filter connector water inlet and a water purifying filter connector water outlet, the water purifying filter connector water inlet connected with the pump water outlet pipe, and the water purifying filter connector water outlet connected with the water outlet spout; the water purifying filter includes a water purifying filter water inlet and a water purifying filter water outlet; when the water purifying filter is mounted in the water supply device housing, the water purifying filter water inlet is in communication with the water purifying filter connector water inlet, and the water purifying filter water outlet is in communication with the water purifying filter connector water outlet.

Further, the pump module is disposed within the water supply device housing and stacked with the filter module.

Further, a water purifying filter connector support portion for supporting the water purifying filter connector is provided in the water supply device housing.

Further, the water purifying filter connector support portion includes a cylindrical portion, the water purifying filter connector is provided with an annular recess, a sealing ring is provided in the annular recess, and the water purifying filter connector support portion is sealingly connected with the sealing ring.

Further, the water supply assembly further includes a control module which is provided above the pump module.

Further, the pump module includes a fixing member and a pump, the fixing member being mounted in the water supply device housing; and the fixing member includes a pump receiving cavity, and the pump is located in the pump receiving cavity.

Further, the pump module further includes a battery, the battery is electrically connected with the pump, the fixing member is further provided with a battery receiving cavity, and the battery is located in the battery receiving cavity.

Further, a support portion is provided in the water supply device housing, the water supply assembly further includes a pressing plate, the pressing plate is mounted on the water supply device housing, and in the axial direction of the water supply device housing, the pressing plate and the support portion position the pump module in the water supply device housing.

Further, the water purifying filter is snap-fitted with the water supply device housing, or the water purifying filter is connected with the water purifying filter connector by threads.

Further, a sterilization device is provided between the water purifying filter connector water outlet and the water outlet spout.

According to another aspect of the present invention, provided is a water purifier, including a water tank and a water supply assembly, wherein the water supply assembly is the described water supply assembly.

Further, the water tank includes a mounting portion and a containing portion, the water supply assembly is detachably connected with the mounting portion, the containing portion contains raw water, and the pump water inlet pipe is used for draw the raw water from the containing portion.

Further, at least a part of the water supply assembly is disposed within the water tank, the water purifier further includes an upper cover, and the upper cover covers the upper opening of the water tank and covers a top of the at least the part of the water supply assembly.

Further, the water purifier is provided with a handle.

According to another aspect of the present invention, the water supply assembly is provided, the water supply assembly includes: a pump connected with a pump water inlet pipe and a pump water outlet pipe; a water outlet spout and a water inlet spout, in a height direction of the water supply assembly, both the water outlet spout and the water inlet spout being located on an upper portion of the water supply assembly; and a filter module, connected with the pump, wherein a water inlet of the filter module is in communication with the water inlet spout, a water outlet of the filter module is in communication with the pump water inlet pipe, and the pump water outlet pipe is in communication with the water outlet spout.

Further, the filter module includes the described water purifying filter.

Further, the water supply assembly further includes a water supply device housing, and the water outlet spout and the water inlet spout are located on two sides of the water supply device housing respectively.

Further, the water supply device housing has a T shape as a whole, and the water inlet spout and the water outlet spout are located at two ends of a transverse part of the T shape respectively.

Further, the filter module includes a water purifying filter and a water purifying filter connector, the water purifying filter being detachably connected with the water purifying filter connector; the water purifying filter connector includes a water purifying filter connector water inlet and a first water outlet which are in communication with each other, and a second water inlet and a water purifying filter connector water outlet which are in communication with each other; the water purifying filter includes a water purifying filter water inlet and a water purifying filter water outlet; when the water purifying filter is mounted on the water purifying filter connector, the water inlet spout is in communication with the water purifying filter connector water inlet, the first water outlet is in communication with the water purifying filter water inlet, the water purifying filter water outlet is in communication with the second water inlet, and the water purifying filter connector water outlet is in communication with the pump water inlet pipe.

According to another aspect of the present invention, provided is a water purifier, including a water tank and a water supply assembly, the water supply assembly being detachably connected with the water tank, wherein the water supply assembly is the described water supply assembly.

Further, the water tank includes a mounting portion and a containing portion, the mounting portion includes a sidewall, the sidewall and an inner wall of the water tank define an installation space for the water supply assembly, and an upper edge of the sidewall and/or an upper edge of the inner wall of the water tank are used for supporting the water supply assembly.

Further, the water tank includes a mounting portion and a containing portion, the mounting portion includes a sidewall, the sidewall and the inner wall of the water tank define an installation space for the water supply assembly, and the bottom of the water tank is used for supporting the water supply assembly.

According to another aspect of the present invention, provided is a water supply assembly, including: a water supply pipe, being provided with a water inlet end and a water outlet end, the water inlet end being used for connecting with a water source, and the water outlet end forming a water outlet spout or connecting with a water outlet spout; a pump and a water purifying filter, both being provided on the water supply pipe, the pump being arranged close to the water inlet end relative to the water purifying filter; and a pressure relief pipe, connected with the water supply pipe, the pressure relief pipe being configured to be in a pressure relief state when the pump is turned off so as to relieve at least a part of the pressure in the water supply pipe.

Further, the water purifying filter is the described water purifying filter.

Further, the water supply assembly further includes an electric control valve, the electric control valve is located on the pressure relief pipe, and the pressure relief pipe is connected in parallel to the water supply pipe.

Further, a first end of the pressure relief pipe is connected between the pump and the water purifying filter, and a second end of the pressure relief pipe is connected between the water inlet end and the pump, or a second end of the pressure relief pipe is in communication with the water source.

Further, a first end of the pressure relief pipe is connected between the water purifying filter and the water outlet spout, and a second end of the pressure relief pipe is connected between the water inlet end and the pump, or a second end of the pressure relief pipe is in communication with the water source.

Further, the water supply assembly further includes a one-way valve which is arranged on the water supply pipe and is located between the water purifying filter and the water outlet end.

Further, the water supply pipe is connected with the pressure relief pipe by the electric control valve, the electric control valve is a three-way valve, and the electric control valve is configured to open the water supply pipe and close the pressure relief pipe when the pump is turned on, and close the water supply pipe and open the pressure relief pipe when the pump is turned off.

Further, the electric control valve is arranged between the pump and the water purifying filter, or the electric control valve is arranged between the water purifying filter and the water outlet spout.

Further, the electric control valve is connected with a first end of the pressure relief pipe, and a second end of the pressure relief pipe is connected between the water inlet end and the pump, or a second end of the pressure relief pipe is in communication with the water source.

According to another aspect of the present invention, provided is a water purifier, including a water tank and a water supply assembly, wherein the water supply assembly is the described water supply assembly.

In the water purifier of the present invention, the water path connection between the water purifying filter and the pump is simple, facilitating assembly; the pump and the water purifying filter are integrated to form the water supply assembly, providing a high degree of integration and a compact structure; the water purifier as a whole has a small size and is portable, occupies a small space, has a low requirement for environments and space, and can be used in both a normal temperature environment and a refrigerator environment, allowing a user to change a placement position at any time as needed, providing high flexibility, and improving the portability and applicability of the water purifier.

### Brief Description of the Drawings

The drawings constituting a part of the invention are intended to provide better understanding of the present invention, and the schematic embodiments of the present invention and the description thereof are used to explain the present invention, but not to limit the present invention improperly. In the drawings:
Fig. 1 is a structural schematic diagram of a water purifier according to embodiment 1 of the present invention;
Fig. 2 is a top view of Fig. 1;
Fig. 3 is an exploded view of Fig. 1;
Fig. 4 is a schematic diagram of a water supply assembly of Fig. 1;
Fig. 5 is a schematic diagram of a water supply device housing of Fig. 4;
Fig. 6 is a schematic diagram of the section view in the A-A direction of Fig. 5;
Fig. 7 is a top view of Fig. 5;
Fig. 8 is a schematic diagram of a fixing member being fitted with a battery of a pump;
Fig. 9 is a top view of Fig. 8;
Fig. 10 is a bottom view of Fig. 8;
Fig. 11 is a schematic diagram of a water purifying filter being fitted with a water purifying filter connector;
Fig. 12 is a top view of Fig. 11;
Fig. 13 is a schematic diagram of the section view in the B-B direction of Fig. 12;
Fig. 14 is a schematic diagram of the section view in the C-C direction of Fig. 12;
Fig. 15 is a schematic diagram of water path connection;
Fig. 16 is a structural schematic diagram of the water purifying filter;
Fig. 17 is a schematic diagram of a partial structure of the water purifying filter;
Fig. 18 is a schematic diagram of a water supply device housing;
Fig. 19 is a longitudinal section view of Fig. 18 at a second snap-fitting installation structure;
Fig. 20 is a longitudinal section view, at a snap-fitting member, of the water purifying filter being fitted with the water supply device housing;
Fig. 21 is a first structural schematic diagram of a water supply assembly;
Fig. 22 is a schematic diagram of the water path of Fig. 21;
Fig. 23 is a second structural schematic diagram of the water supply assembly;
Fig. 24 is a schematic diagram of the water path of Fig. 23;
Fig. 25 is a third structural schematic diagram of the water supply assembly;
Fig. 26 is a schematic diagram of the water path of Fig. 25;
Fig. 27 is a fourth structural schematic diagram of the water supply assembly;
Fig. 28 is a schematic diagram of the water path of Fig. 28;
Fig. 29 is a schematic diagram of a first sterilization device on a water supply pipe;
Fig. 30 is a schematic diagram of the section view structure of the water supply assembly;
Fig. 31 is a schematic diagram of the three-dimensional structure of the water supply assembly;
Fig. 32 is a structural schematic diagram of the water supply assembly being fitted with an upper cover;
Fig. 33 is a schematic diagram of a third sterilization device and a part of the water supply pipe;
Fig. 34 is a schematic diagram of a water tank; and
Fig. 35 is a structural schematic diagram of a water path according to embodiment 2 of the present invention.

In the drawings,
1. water purifying filter; 11. filter housing; 111. sidewall; 112. closed end; 113. clearance recess; 12. filter element; 13. water purifying filter cover body;
2. snap-fitting member; 21. snap-fitting portion; 211. first snap-fitting installation structure; 212. force applying region; 22. connecting portion;
31. second snap-fitting installation structure; 32. notch groove;
4. water tank; 41. handle; 42. mounting portion; 421. sidewall; 43. containing portion;
5. water supply assembly; 51. water supply device housing; 511. water inlet spout screw post; 512. support portion; 513. pressing plate screw post; 514. water outlet spout screw post; 515. circuit board bracket; 516. circuit board support screw post; 517. power panel screw post; 518, screw post; 519. water purifying filter connector support portion; 5191. connecting member; 52. pump; 521. pump inlet pipe; 522. pump outlet pipe; 53. water outlet spout; 54. water purifying filter connector; 541. water purifying filter connector water inlet; 542. water purifying filter connector water outlet; 543. water purifying filter water outlet pipe; 544. annular recess; 545. sealing ring; 55. water supply upper cover; 551. water purifying filter water inlet; 552. water purifying filter water outlet; 56. water inlet spout; 561. water suction pipe; 562. coarse filter structure; 57. fixing member; 571. pump receiving cavity; 5711. rib; 572. water purifying filter connector accommodating recess; 573. water purifying filter connector screw post; 574. battery receiving cavity; 58. pressing plate; 59. battery;
6. upper cover;
71. water supply pipe; 713. first water supply pipe section; 714. second water supply pipe section; 715. third water supply pipe section; 716. transparent portion;74. pressure relief pipe; 741. first end; 742. second end; 743. electric control valve; 75. one-way valve; 76. sterilization device; 761. first sterilization device;762. second sterilization device; 763. third sterilization device; 77. three-way solenoid valve; 782. water supply upper cover; 783. first sealing element; 784. second sealing element; 785. third sealing element; 786. fourth sealing element; 787. screw-hole silicone rubber plug; 788. charging interface silicone rubber plug.

### Detailed Description of the Embodiments

The technical solutions in the embodiments of the present invention will be described clearly and completely with reference to the drawings in the embodiments of the present invention. Apparently, the described embodiments are merely some rather than all of the embodiments of the present invention. The following description of at least one exemplary embodiment is merely illustrative in nature and is in no way intended to limit the present invention and any invention or use thereof. All other embodiments obtained by a person skilled in the art on the basis of the embodiments of the present invention without creative efforts shall belong to the scope of protection of the present invention.

### Embodiment 1:

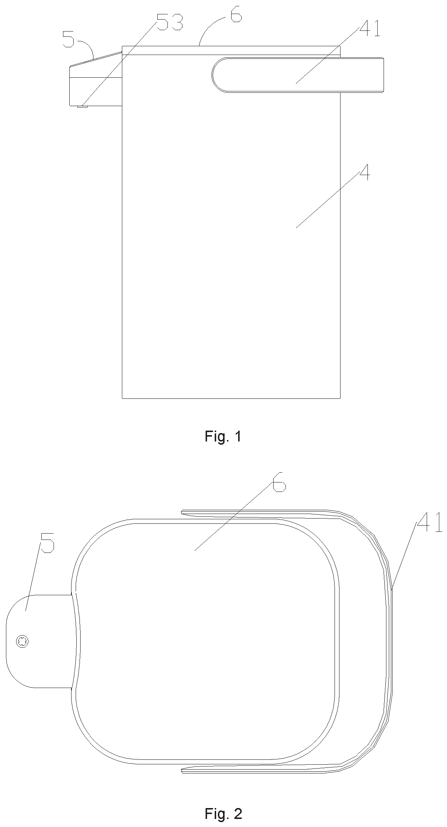

As shown in Figs. 1 and 2, the present invention provides a water purifier. The water purifier includes a water tank 4 and a water supply assembly 5, wherein the water tank 4 is used for containing raw water, and the water supply assembly 5 is used for purifying the raw water in the water tank 4 and causing the obtained purified water to flow out via a water outlet spout 53. At least a part of the water supply assembly 5 is disposed within the water tank 4. The water purifier further includes an upper cover 6, wherein the upper cover 6 covers the upper opening of the water tank 4 and covers the top of the at least a part of the water supply assembly 5.

The water purifier is provided with a handle 41. Specially-shaped holes for the fitting of the handle 41 are provided on sidewalls of the water tank 4, achieving installation and rotational limiting of the handle 41. The handle 41 makes the water purifier portable.

The water purifier may be a kettle.

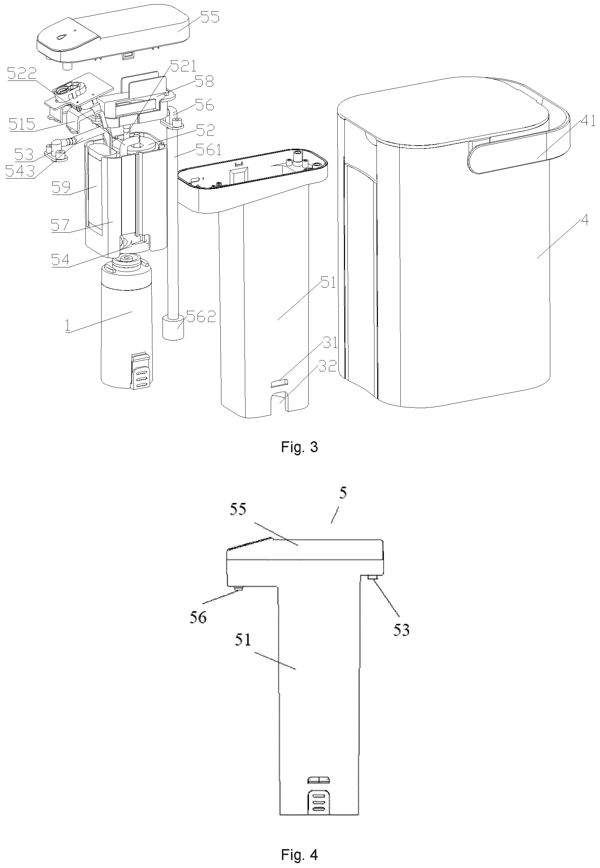

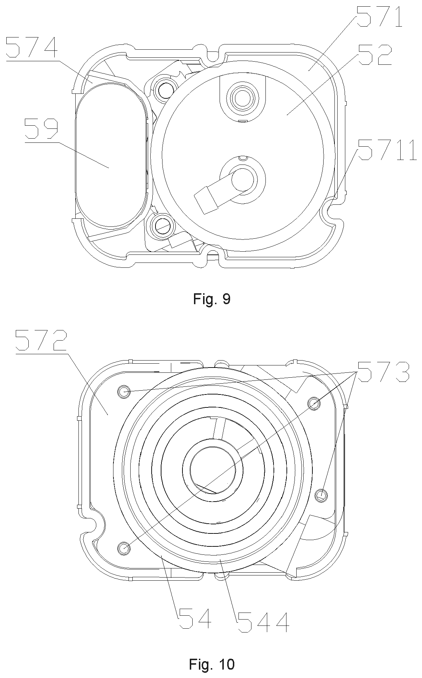

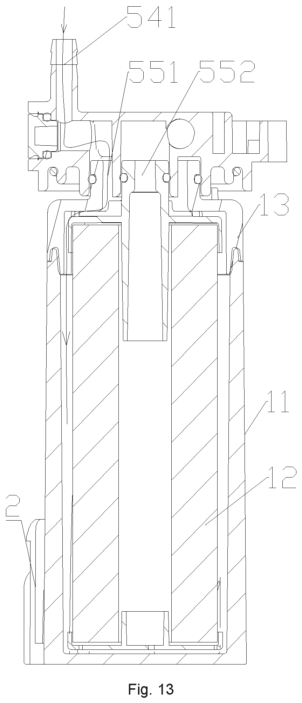

As shown in Figs. 3 to 15, the water supply assembly 5 includes a water supply device housing 51, a water supply upper cover 55, a water inlet spout 56, a water outlet spout 53, a pump module, and a filter module. The pump module is connected with a pump water inlet pipe 521 and a pump water outlet pipe 522. The pump module includes a pump 52, one end of the pump 52 is provided with a pump end cover, and the pump end cover is provided with a pump water inlet and a pump water outlet. The pump water inlet is connected with the pump water inlet pipe 521, and the pump water outlet is connected with the pump water outlet pipe 522.

Both the pump module and the filter module are disposed within the water supply device housing 51, a water inlet of the filter module is connected with the pump water outlet pipe 522, and a water outlet of the filter module is connected with the water outlet spout 53.

The filter module includes a water purifying filter connector 54 and a water purifying filter 1, the water purifying filter connector 54 is mounted in the water supply device housing 51, and the water purifying filter 1 is detachably mounted in the water supply device housing 51 and is connected with the water purifying filter connector 54.

In the water supply device housing 51, the pump module stacked with the filter module, and the pump module is located on top of the filter module. The water purifying filter connector 54 is arranged on bottom of the pump module, and the water purifying filter 1 is connected with the side of the water purifying filter connector 54 away from the pump module. The water supply upper cover 55 is used for closing the top end of the water supply device housing 51; snap-fitting structures fitting with each other are provided between the water supply upper cover 55 and the water supply device housing 51; and when assembly is performed, the snap-fitting structures between the water supply upper cover 55 and the water supply device housing 51 are correspondingly fitted, and then the water supply upper cover 55 is fixedly mounted on screw posts 518 at the upper end of the water supply device housing 51.

Both the pump 52 and the water purifying filter connector 54 are fixedly mounted in the water supply device housing 51, the water purifying filter 1 is detachably connected with the bottom of the water supply device housing 51 and is located inside the water supply device housing 51, and the water purifying filter 1 is connected with the water purifying filter connector 54 when mounted in the water supply device housing 51.

The pump end cover is located at the end of the pump 52 away from the water purifying filter connector 54. In order to avoid an excessively large bending angle of the pump water outlet pipe 522, the pump end cover is provided with an elbow water outlet.

The pump water inlet pipe 521 is connected with the water inlet spout 56; the water inlet spout 56 is fixedly mounted on water inlet spout screw posts 511 of the water supply device housing 51; the water inlet spout 56 is connected with a water suction pipe 561; a coarse filter structure 562 is provided at a water inlet end of the water suction pipe 561; and the coarse filter structure 562 is close to the bottom of the water tank 4, and is used for filtering large particle impurities in raw water.

The water purifying filter connector 54 is mounted in the water supply device housing 51. The water purifying filter connector 54 includes a water purifying filter connector water inlet 541 and a water purifying filter connector water outlet 542. The water purifying filter connector water inlet 541 is connected with the pump water outlet pipe 522, and the pump water outlet pipe 522 is also a water purifying filter water inlet pipe. The water purifying filter connector water outlet 542 is connected with the water outlet spout 53. Specifically, the water purifying filter connector water outlet 542 is connected with the water outlet spout 53 by a water purifying filter water outlet pipe 543, and the water outlet spout 53 is fixedly mounted on water outlet spout screw posts 514 of the water supply device housing 51.

A plurality of water outlet ribs are provided in the water outlet spout 53, ensuring a smooth water stream and preventing water from splashing around. Water outlet ribs are arranged parallel to the axis of the water outlet spout 53; and generally four water outlet ribs are provided and are uniformly distributed in the water outlet spout 53.

The water purifying filter 1 includes a water purifying filter water inlet 551 and a water purifying filter water outlet 552. When the water purifying filter 1 is mounted on the water supply device housing 51, the water purifying filter 1 is connected with the water purifying filter connector 54. Specifically, the water purifying filter water inlet 551 is in communication with the water purifying filter connector water inlet 541, and the water purifying filter water outlet 552 is in communication with the water purifying filter connector water outlet 542, so as to form a complete water path structure.

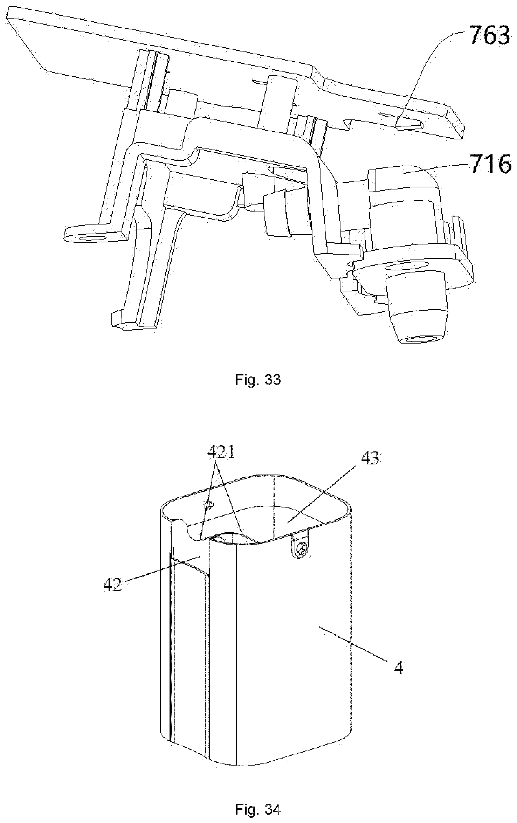

As shown in Fig. 34, in this embodiment, the water tank 4 includes a mounting portion 42 and a containing portion 43. The water supply assembly is detachably mounted on the mounting portion 42, the containing portion 43 is used for storing water, and the water inlet spout 56 is in fluid communication with the containing portion 43 by the water suction pipe 561.

Specifically, the mounting portion 42 and the containing portion 43 are arranged adjacent to each other inside the water tank 4; when the described assembly is mounted in the mounting portion 42, the water outlet spout 53 thereof extends out of the water tank 4 so as to allow users to easily take water; the water inlet spout 56 is located above the containing portion 43, and the water suction pipe 561 is connected with the water inlet spout 56 and extends into the bottom of the containing portion 43 to suction water.

As shown in Fig. 1, the water tank is provided with a handle 41, and the handle 41 can achieve portability of the water tank 4.

As shown in Fig. 4, in this embodiment, the water supply assembly further includes the water supply device housing 51, and the water outlet spout 53 and the water inlet 56 are located on two sides of the water supply device housing 51 respectively.

Further, the water supply device housing 51 has a T shape as a whole, and the water outlet spout 53 and the water inlet spout 56 are located at two ends of the transverse part of the T shape.

As shown in Fig. 34, in this embodiment, the mounting portion 42 includes sidewall 421, the sidewall 421 and the inner wall of the water tank 4 define an installation space for the water supply assembly, and the upper edges of the sidewall 421 and the upper edge of the inner wall of the water tank 4 are used for supporting the water supply assembly.

In this embodiment, the mounting portion 42 is enclosed together by the water tank and the plurality of sidewalls 421 disposed inside the water tank 4, and the inner space of the mounting portion 42 is adapted to the outline of the vertical part of the T shape of the water supply assembly. When the water supply assembly is mounted in the mounting portion 42, the upper edges of the sidewalls 421 and a part of the upper edge of the water tank 4 support the lower surface of the transverse part of the T shape of the water supply assembly, so as to ensure that the water supply assembly is stably mounted in the water tank 4. Furthermore, such a support and installation method facilitates assembly, disassembly, and cleaning by users.

In addition to the described support method, the following method may also be used to support the water supply assembly: the mounting portion 42 includes sidewall 421, the sidewall 421 and the inner wall of the water tank 4 define an installation space for the water supply assembly, and the bottom of the water tank 4 is used for supporting the water supply assembly.

When the water supply assembly is mounted in the installation space, the bottom of the water supply assembly is placed on the bottom wall of the water tank 4, achieving support of the water supply assembly. Moreover, the plurality of sidewall 421 define the position of the water supply assembly in the circumferential direction, and the bottom of the water tank 4 defines the position of the water supply assembly in the vertical direction, ensuring that the water supply assembly is not prone to shaking during use.

Of course, the support method for the water supply assembly in the vertical direction may also be the combination of the described two methods, and a person skilled in the art can make a selection as needed.

The mounting portion and the containing portion herein may be formed inside the water tank together by a partition plate; alternatively, it is also possible to configure the containing portion to be the entire inner cavity body of the water tank, and configure the mounting portion to be a mounting cavity body of the water supply assembly, the mounting cavity body is formed outside the water tank by a surrounding plate. Of course, the mounting portion may also be a mounting structure on the water tank, and the water supply assembly and the water tank may also be connected and fitted by means of insertion fitting, hook connection, snap fitting, etc.

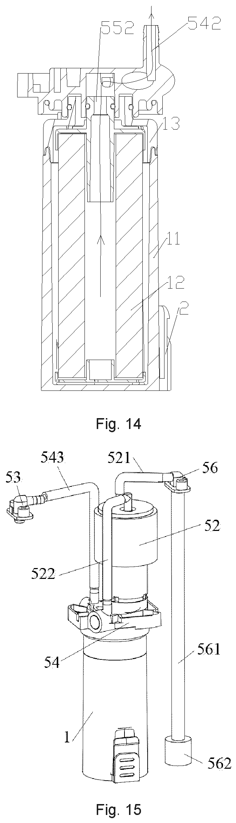

As shown in Figs. 3 and 15, when the pump 52 works, under the action of the pump 52, raw water in the water tank 4 passes through the coarse filter structure 562, the water suction pipe 561, the water inlet spout 56, the pump water inlet pipe 521, the pump 52, the pump water outlet pipe 522, the water purifying filter connector water inlet 541, the water purifying filter 1, the water purifying filter connector water outlet 542, and the water purifying filter water outlet pipe 543 in sequence, and then clean water flows out via the water outlet spout 53.

When the pump 52 works, raw water in the water tank 4 is pumped into the water purifying filter 1 under the action of the pump 52, filtered by the water purifying filter 1, and then delivered to the water outlet spout 53 to flow out. That is to say, the water purifying filter in this embodiment is located on the pump head of the pump 52, and water is delivered into the water purifying filter 1 by the pump head of the pump 52. On the contrary, in the water path in the prior art in which, raw water first passes through the water purifying filter and then is pumped out by the pump, the raw water is suctioned into the water purifying filter by means of the suction lift of the pump and then is delivered to the water outlet, and the water purifying filter is located on the suction lift of the pump. Because the pump head is larger than the suction lift of the pump, compared with the water path system in the prior art, the water path system of this embodiment uses the pump head to deliver water to the water purifying filter, such that the water path system has a high flow rate, high filtration efficiency, and a high water outflow speed.

The pump module includes a fixing member 57; the fixing member 57 is mounted in the water supply device housing 51; and the fixing member 57 is used for bearing the water purifying filter connector 54 and the pump 52, such that the structure of the water purifying filter connector 54 and the pump 52 is compact, and the fixing member 57, the pump 52, and the water purifying filter connector 54 can be integrated, and can be integrally mounted in the water supply device housing 51 and can be integrally removed during disassembly, allowing for convenient installation and simple operation.

The water purifying filter connector 54 is fixedly mounted on the fixing member 57, the fixing member 57 includes a pump receiving cavity 571, and the pump 52 is located in the pump receiving cavity 571.

Specifically, the top end of the fixing member 57 is provided with the pump receiving cavity 571, and sidewalls of the pump receiving cavity 571 are provided with a plurality of convex ribs 5711 to position the pump 52. The water purifying filter connector 54 is mounted at the bottom end of the fixing member 57, and the water purifying filter connector 54 is fixedly mounted at the bottom end of the fixing member 57. The bottom end of the fixing member 57 may also be provided with a water purifying filter connector accommodating recess 572, and the water purifying filter connector 54 is fixedly mounted in the water purifying filter connector accommodating recess 572. water purifying filter connector screw posts 573 are provided at the bottom of the water purifying filter connector accommodating recess 572 or at the bottom end of the fixing member 57, so as to facilitate the installation of the water purifying filter connector 54.

The fixing member 57 is provided with through holes for allowing the pump water outlet pipe 522 and the water purifying filter water outlet pipe 543 to pass therethrough.

When the pump 52 and the water purifying filter connector 54 are mounted on the fixing member 57, the pump 52 is located above the water purifying filter connector 54.

The water supply device housing 51 is internally provided with support portions 512 which is used for supporting the fixing member 57 when the fixing member 57 is placed in the water supply device housing 51.

In order to fix the fixing member 57 with the pump 52, the water supply assembly 5 includes a pressing plate 58; the pressing plate 58 is fixedly mounted on the water supply device housing 51; the pressing plate 58 presses the fixing member 57 on the support portions 512; and the pressing plate 58 is used for pressing the pump 52 against the fixing member 57. In the axial direction of the water supply device housing 51, the pressing plate 58 and the support portions 512 position the pump module in the water supply device housing 51. The fixation of the fixing member 57 to the water supply device housing 51 and the fixation of the pump 52 to the fixing member 57 are achieved by the fixation of the pressing plate 58 to the water supply device housing 51, reducing fixation structures, the volume, and fixation steps. Pressing plate screw posts 513 are provided on the water supply device housing 51, and the pressing plate 58 is fixedly mounted on the pressing plate screw posts 513.

Preferably, the support portions 512 in this embodiment are support ribs extending inwards from the inner wall surface of the water supply device housing 51.

Both the water inlet spout 56 and the water outlet spout 53 in this embodiment are located on the upper portion of the water supply assembly. The upper portion herein refers to the portion above the central cross section in the height direction of the water supply assembly. In the present embodiment, the water outlet spout 53 is provided on the upper portion, allowing users to easily take water and use water, and providing a sufficient container placement space; and the water inlet spout 56 is arranged on the upper portion, allowing users to easily connect water pipes as needed to meet the requirements for communication of different water sources.

In other embodiments not shown in the drawings, the water inlet and outlet spouts may also be arranged by the following method: the water outlet spout is arranged on the upper portion of the water supply assembly to allow users to easily take water; and the water inlet spout is arranged at the bottom of a water source, and a water pipe is laid at the bottom of the water source and is connected with the pump. This arrangement method for the water inlet and outlet spouts can ensure full use of water (especially when the water is disposed within a fixed container), and achieves a simple appearance as the water pipe is not exposed.

As shown in Figs. 2 and 3, in this embodiment, the water supply assembly further includes the water supply device housing 51, and the pump 52 is located in the water supply device housing 51.

By arranging the pump 52 in the water supply device housing 51, exposure of the pump 52 is avoided, and the whole structure of the water supply assembly is aesthetic and has a high degree of integration.

As shown in Fig. 3, in this embodiment, the water inlet spout 56 is connected with the water suction pipe 561, and the water suction pipe 561 is connected with a water source.

Specifically, the water inlet spout 56 is connected with the water suction pipe 561, the size of the water suction pipe 561 is determined on the basis of the specific form of the water source, and the water inlet spout 56 is located on the upper portion of the water assembly, such that the connection operation by a user is convenient, and disassembly and cleaning can be performed at any time as needed, improving the convenience for a user to use.

Preferably, a first end of the water suction pipe 561 is connected with the water inlet spout 56, a second end of the water suction pipe 561 extends into a water source, and the second end of the water suction pipe 561 is provided with the coarse filter structure 562 which can effectively filter slush or other large-particle impurities in the water, such that the water is preliminarily filtered before passing through the filter device, further improving the filtering effect.

In some embodiments, the pump module includes a battery 59, and the battery 59 is electrically connected with the pump 52, enhancing the portability and mobility of the water purifier, and omitting connection to an alternating current, allowing for operation with or without an external power supply. Preferably, the battery 59 is a rechargeable battery, and a charging port is provided on the water supply device housing 51, facilitating charging of the battery 59.

The battery 59 supplies power to the pump 52, enhancing the portability and mobility of the water supply assembly, allowing for working without an external power supply. Preferably, the battery 59 is a rechargeable battery, a charging port is provided on the water supply device housing 51, and the battery 59 is charged by an external power supply via the charging port.

Further, when the battery 59 is out of power and there is a need to use the water supply assembly to take water, the pump 52 may be directly powered using an adapter to connect the charging port with an external power supply, so as to meet the requirement for emergency water taking. After water taking is finished, the external power supply charges the battery 59 by the adapter. Thus, the water supply assembly may be powered by a battery alone, and may also be used while being plugged in when necessary, which is convenient and quick, and has high practicability.

In order to facilitate the installation of the battery 59 and achieve the effect of a compact structure after the battery 59 is installed, the fixing member 57 includes a battery receiving cavity 574, and the battery 59 is located in the battery receiving cavity 574. The fixing member 57 is used for bearing the water purifying filter connector 54, the battery 59, and the pump 52, so that the structure of the water purifying filter connector 54, the battery 59 and the pump 52 is compact, and the fixing member 57, the battery 59, the pump 52, and the water purifying filter connector 54 can be integrated, and can be integrally mounted in the water supply device housing 51 and can be integrally removed during disassembly, allowing for convenient installation and simple operation.

The battery receiving cavity 574 and the pump receiving cavity 571 are arranged side by side on the fixing member 57; accordingly, when the battery 59, the pump 52, and the water purifying filter connector 54 are mounted on the fixing member 57, the battery 59 and the pump 52 are arranged side by side above the water purifying filter connector 54.

Further, the battery receiving cavity 574 and the pump receiving cavity 571 are partitioned by a partition plate, such that the battery receiving cavity 574 and the pump receiving cavity 571 can be adapted to the shapes of the battery 59 and the pump 52 respectively, facilitating an assembly operation.

The pressing plate 58 is used for pressing the pump 52 and the battery 59 together onto the fixing member 57. The fixation of the fixing member 57 to the water supply device housing 51 and the fixation of the pump 52 and the battery 59 to the fixing member 57 are achieved by the fixation of the pressing plate 58 to the water supply device housing 51, reducing fixation structures, the volume, and fixation steps.

In some embodiments, a sterilization device (not shown in the drawings) is provided between the water purifying filter connector water outlet 542 and the water outlet spout 53, and the sterilization device is located on the water path and is used for sterilization and disinfection of filtered clean water. A sterilization device is arranged on the water purifying filter water outlet pipe 543.

The sterilization device is mounted between two vertical plates at the top end of the pressing plate 58.

A circuit board bracket 515 is mounted on the water supply device housing 51; the circuit board bracket 515 is used for the installation of a control module; the control module is provided above the pump module; and the control module is used for controlling the start and stop of the pump 52 so as to control water to flow out or not. A power panel for managing the battery 59 is mounted on the water supply device housing 51 and located below the circuit board bracket 515. The water supply device housing 51 is provided with circuit board bracket screw posts 516 and power panel screw posts 517, wherein the circuit board bracket screw posts 516 are used for mounting the circuit board bracket 515, and the power board screw posts 517 are used for mounting the power panel.

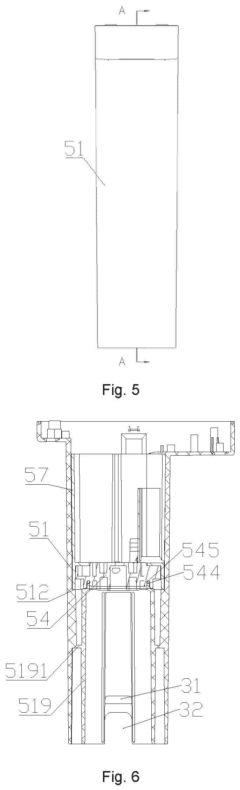

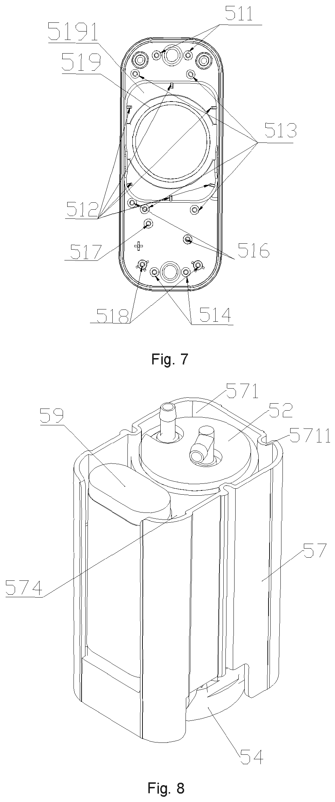

As shown in Figs. 6 and 7, a water purifying filter connector support portion 519 is provided in the water supply device housing 51, and the water purifying filter connector support portion 519 is in contact with the water purifying filter connector 54 and is used for supporting the water purifying filter connector 54. The shape of the inner wall of the water purifying filter connector support portion 519 is adapted to the shape of the outer wall of the water purifying filter 1, such that the water purifying filter connector support portion may also play a guiding role during installation and detachment of the water purifying filter 1.

Preferably, the water purifying filter connector support portion 519 includes a cylindrical portion, and the water purifying filter connector support portion 519 is connected with the inner wall of the water supply device housing 51 by two connecting members 5191. Further, the water purifying filter connector support portion 519 includes a cylindrical portion.

The water purifying filter connector 54 is provided with an annular recess 544 matching the water purifying filter connector support portion 519; a sealing ring 545 is provided in the annular recess 544; the top end of the cylindrical portion of the water purifying filter connector support member 519 is located in the annular recess 544 and is sealingly connected with the sealing ring 545; the sealing ring 545 being arranged between the water purifying filter connector support member 519 and the water purifying filter connector 54 prevents residual water from entering components above the water purifying filter connector 54 during detachment of the water purifying filter 1, avoiding damage to electronics and circuits above the water purifying filter connector 54.

The water purifying filter is provided with a snap-fitting member on the filter housing, and is fitted with a water purifying filter fitting member by the snap-fitting member, providing a simple structure and easy operation, and facilitating the detachment and installation and replacement of the water purifying filter.

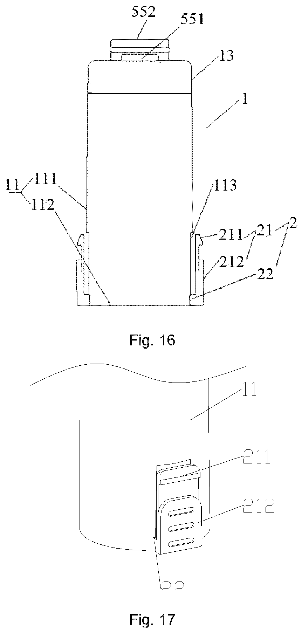

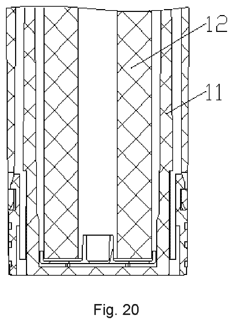

As shown in Figs. 16, 17, and 20, the water purifying filter 1 of this embodiment includes a filter housing 11 and a filter element 12, the filter element 12 being located within the filter housing 11.

The filter housing 11 is generally cylindrical, and includes a sidewall 111 and end portions located at two ends of the sidewall 111; and the filter housing 11 forms a space for accommodating the filter element 12.

A raw water space is formed between the outer wall surface of the filter element 12 and the sidewall 111 of the filter housing 11, and is in communication with the water purifying filter water inlet 551, and a central hole of the filter element 12 is in communication with the water purifying filter water outlet 552.

One end portion of the filter housing 11 is a closed end portion 112, and the other end portion of the filter housing is an opening; the filter housing 11 includes a water purifying filter cover body 13; and the opening is fitted with the water purifying filter cover body 13.

Generally, the water purifying filter 1 has a certain service life. In order to facilitate installation and detachment operations of the water purifying filter 1, the structure of the filter housing 11 is improved in this embodiment. A snap-fitting member 2 is provided on the filter housing 11, a second snap-fitting installation structure 31 matching the snap-fitting member 2 is provided on the water supply device housing 51; and assembly is performed by the second snap-fitting installation structure 31 and the snap-fitting member 2, which is convenient and quick. When the snap-fitting member 2 is snap-fitted with the second snap-fitting installation structure 31, the water purifying filter 1 is connected with the water purifying filter connector 54, the water purifying filter water inlet 551 is in communication with the water purifying filter connector water inlet 541, and the water purifying filter water outlet 552 is in communication with the water purifying filter connector water outlet 542.

The filter housing 11 is provided with the snap-fitting member 2; the snap-fitting member 2 includes a snap-fitting portion 21; the snap-fitting portion 21 is provided with a first snap-fitting installation structure 211; a gap is formed between the snap-fitting portion 21 and a sidewall of the filter housing 11, and the snap-fitting portion 21 can be biased towards the sidewall 111 of the filter housing 11 and be restored.

The snap-fitting portion 21 is made of a material that has certain rigidity and can deform in a certain amount and be restored after deformation.

The first snap-fitting installation structure 211 in this embodiment is configured as a claw. Of course, the first snap-fitting installation structure 211 may also be configured as a snap-fitting block, a snap-fitting groove, a snap-fitting hole, or other snap-fitting forms.

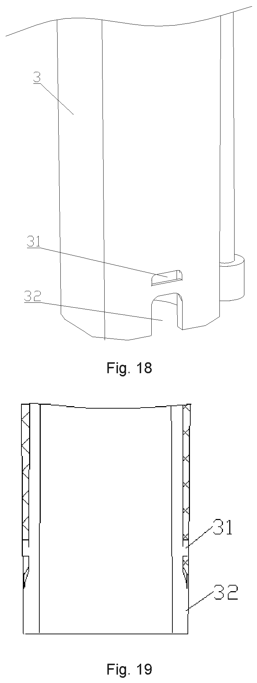

Correspondingly, as shown in Figs. 18 and 19, the second snap-fitting installation structure 31 adapted to the first snap-fitting installation structure 211 is provided on the water supply device housing 51. When the first snap-fitting installation structure 211 is fitted with the second snap-fitting installation structure 31, snap-fitting fastening is formed.

When the first snap-fitting installation structure 211 is configured as a claw or a snap-fitting block, the second snap-fitting installation structure 31 is configured as a snap-fitting groove or a snap-fitting hole; and when the first snap-fitting installation structure 211 is configured as a snap-fitting groove or a snap-fitting hole, the second snap-fitting installation structure 31 is configured as a claw or a snap-fitting block.

In order to facilitate installation of the water purifying filter, the extending direction of the snap-fitting portion 21 is substantially the same as the extending direction of the sidewall 111 of the filter housing 11. Accordingly, the snap-fitting member 2 of this embodiment further includes a connecting portion 22; the connecting portion 22 is used for connecting the filter housing 11 with the snap-fitting portion 21; and the connecting portion 22 is arranged at an angle with respect to the snap-fitting portion 21.

Preferably, the connecting portion 22 is arranged at an angle of 90 degrees with respect to the sidewall 111, and the connecting portion 22 is arranged at an angle of 90 degrees with respect to the snap-fitting portion 21.

The connecting portion 22 is made of a rigid material, or the connecting portion 22 may be made of a material that has certain rigidity and can deform in a certain amount and be restored after deformation.

The connecting portion 22 is arranged on the sidewall 111 of the filter housing 11 at a position close to the closed end 112 of the filter housing 11. Preferably, the bottom of the connecting portion 22 is flush with the end portion of the filter housing 11, such that the travel of contact between the snap-fitting member 2 and the water purifying filter fitting member can be reduced during the installation of the water purifying filter 1, facilitating the installation, reducing the force for installation, and reducing the time of deformation of the snap-fitting member 2, avoiding deformation and damage to the snap-fitting member 2.

Since the snap-fitting member 2 is additionally arranged on the filter housing 11, the volume of the water purifying filter 1 is inevitably increased. In order to avoid the impact of the snap-fitting member 2 on the volume of the water purifying filter 1 as far as possible, a clearance recess 113 for providing clearance for the snap-fitting member 2 is arranged at a position on the filter housing 11 corresponding to the snap-fitting member 2. A part of the connecting portion 22 is located in the clearance recess 113, and when the snap-fitting portion 21 deforms towards the sidewall 111 of the filter housing 11, the clearance recess 113 can provide clearance for the snap-fitting portion 21.

When the water purifying filter 1 is detached, the first snap-fitting installation structure 211 of the snap-fitting portion 21 can be withdrawn from the second snap-fitting installation structure 31 of the water purifying filter assembly directly or by a tool.

In order to facilitate the detachment of the water purifying filter 1, a force applying region 212 is provided on the snap-fitting portion 21, and when a force is applied to the force applying region 212, the snap-fitting portion 21 deforms towards the sidewall 111 of the filter housing 11, so that the function of the first snap-fitting installation structure 211 for snap-fitting and fastening with the water purifying filter assembly disappears, and the water purifying filter 1 can be detached. Of course, when the water purifying filter 1 is mounted, in order to avoid wearing caused by the contact with the first snap-fitting installation structure 211 and the water purifying filter fitting member and reduce the mounting friction force, an acting force may be applied to the force applying region 212, so that the snap-fitting portion 21 deforms towards the sidewall 111 of the filter housing 11; and when the water purifying filter is mounted in place, the acting force is removed, the snap-fitting portion 21 is restored, and the first snap-fitting installation structure 211 is snap-fitted and fastened with the water purifying filter fitting member.

Preferably, the force applying region 212 is located between the first snap-fitting installation structure 211 and the connecting portion 22.

In order to facilitate force applying, a plurality of protrusions or grooves are provided on the force applying region 212, so as to increase the roughness of the force applying region 212, increase the success rate of force applying, and avoid the difficulty of force applying caused by a smooth surface of the force applying region 212.

Preferably, two snap-fitting members 2 are provided on the water purifying filter 1, and are symmetrically arranged on two sides of the water purifying filter 1. Accordingly, when the water purifying filter 1 is detached, it is only necessary to press the force applying region 212 and pull the water purifying filter 1 out, providing a simple and convenient operation.

In some other embodiments, the connecting portion 22 may also be provided on the water purifying filter cover 13. In this case, according to the position relationship between the snap-fitting portion 21 and the water purifying filter cover 13, the clearance recess 113 may be fully located on the water purifying filter cover 13, or fully located on the sidewall 111 of the housing body, or partially located on the water purifying filter cover 13 and partially located on the sidewall 111 of the housing body.

The bottom of the water supply device housing 51 is open for allowing the water purifying filter 1 to be loaded into the water supply device housing 51 therethrough. The water supply device housing 51 is provided with the second snap-fitting installation structure 31 matching the first snap-fitting installation structure 211. The water purifying filter 1 is mounted in the water supply device housing 51, and the second snap-fitting installation structure 31 is arranged on the inner wall of the water supply device housing 51.

In this embodiment, the first snap-fitting installation structure 211 is a claw, and the second snap-fitting installation structure 31 is a snap-fitting groove or a snap-fitting hole.

Generally, after the water purifying filter 1 is mounted in the water supply device housing 51, the closed end 112 of the water purifying filter 1 is flush with the bottom of the water supply device housing 51, the second snap-fitting installation structure 31 is located on the inner wall of the water supply device housing 51 close to the bottom.

Accordingly, as shown in Figs. 18 and 19, the water supply device housing 51 is provided with a notch groove 32 for exposing the force applying 212.

Of course, the form of the notch groove 32 is not fixed, and may also be a through hole provided in the water supply device housing 51.

Accordingly, the means of detachable connection between the water purifying filter and the water supply device housing requires only two actions for detaching the water purifying filter: pressing the snap-fitting member and pull the water purifying filter out, providing a simple operation.

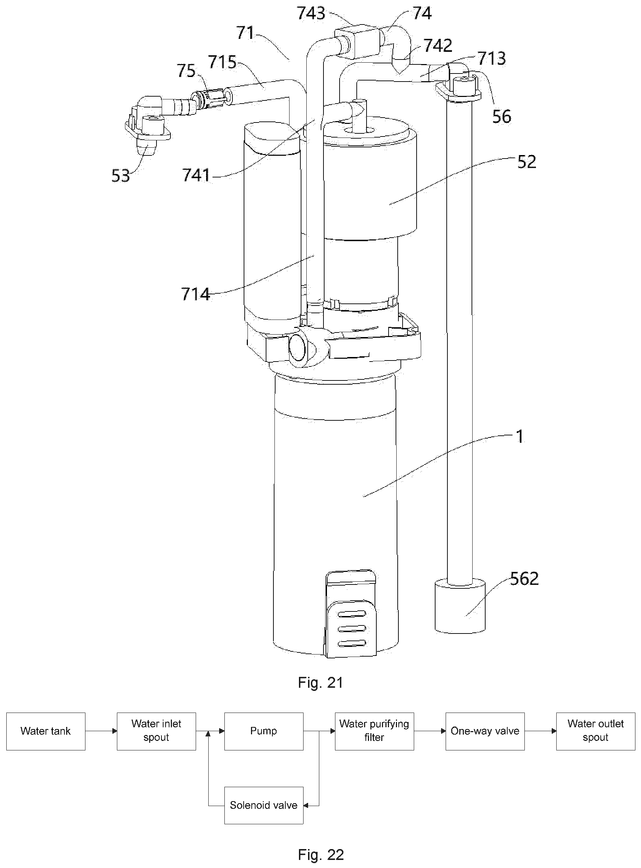

As shown in Figs. 21-24, the present invention provides a water supply assembly, including a water supply pipe 71, the pump 52, the water purifying filter 1, and a pressure relief pipe 74; and the water supply pipe 71 is used for forming a water flow passage, and two ends of the water supply pipe 71 are respectively a water inlet end and a water outlet end.

The water inlet is used for connecting with a water source. The water source can be raw water contained in the water tank, and the water inlet end extends into the water tank to suction water from the water tank to the water supply pipe 71; the water source may also be a pressureless water pipe, the water inlet end is directly connected with a water outlet of the water pipe, and water in the water pipe enters the water supply pipe 71 via a water inlet spout; and the water source may also be a container or scenario that can provide raw water in any space or area (for example, outdoor river, lake, pond, stream, etc.), and the water inlet end suctions raw water from an appropriate position to the water supply pipe 71.

The water outlet end is used for realizing water discharge from the water supply pipe 71. Generally the water outlet end is connected with the water outlet spout 53 or the water outlet end forms the water outlet spout 53.

Both the pump 52 and the water purifying filter 1 are arranged on the water supply pipe 71, and the pump 52 is arranged close to the water inlet end relative to the water purifying filter 1, i.e. between the water inlet end and the water outlet spout 53, the pump 52 and the water purifying filter 1 are sequentially arranged, and the water purifying filter 1 is located on the pump head of the pump.

The pump 52 is used for generating water supply power. The water purifying filter 1 is used for filtering water passing therethrough.

The pressure relief pipe 74 is connected with the water supply pipe 71, and is configured to be in a closed state when the pump 52 is turned on and in a pressure relief state when the pump 52 is turned off so as to discharge at least a part of the pressure in the water supply pipe 71.

Specifically, when the pump 52 is turned on, the pressure relief pipe 74 is in a closed state, all the water in the water supply pipe 71 flows out by the water outlet spout 53, realizing water discharge of the water supply assembly, the water discharge of the water supply assembly being not affected by the pressure relief pipe 74; when the pump 52 is turned off, the pressure relief pipe 74 is in a pressure relief state, so as to discharge the pressure of the water supply pipe 71, and pressure in the water supply pipe 71 is relieved by the pressure relief pipe 74, avoiding water dripping from the water outlet spout 53 when water taking is completed.

In addition to the pump 52 and the water purifying filter 1, other devices (for example, a sterilization device) may also be provided on the water supply pipe 71 as needed, and the positions of the other devices may be set as needed.

The water supply assembly further includes an electric control valve 743, the electric control valve 743 is located on the pressure relief pipe 74, and the pressure relief pipe 74 is connected in parallel to the water supply pipe 71.

The electric control valve 743 is controlled to be closed so as to cause the pressure relief pipe 74 to be in a closed state, and the electric control valve 743 is controlled to be opened so as to cause the pressure relief pipe 74 to be in a pressure relief state. Preferably, the electric control valve 743 in this embodiment is a solenoid valve.

In an alternative embodiment which is not shown, the electric control valve may also be an electric valve, and all types of valves for which opening and closing control can be achieved by energization fall within the scope of protection of the present invention.

A first end 741 of the pressure relief pipe 74 is connected with the water supply pipe 71 between the pump 52 and the water purifying filter 1, and a second end of the pressure relief pipe 74 is connected with the water supply pipe 71 between the water inlet end and the pump 52 or a second end 742 of the pressure relief pipe 74 is in communication with a water source.

The second end 742 of the pressure relief pipe 74 being in communication with a water source specifically includes the following three cases: taking the water source being raw water contained in the water tank as an example, the second end 742 of the pressure relief pipe 74 may be located above the water tank, or the second end 742 of the pressure relief pipe may extend into the water tank, or the second end 742 of the pressure relief pipe is connected with a water tank wall, a water relief hole is formed in the water tank wall, and the second end 742 of the pressure relief pipe is connected with the water relief hole.

In order to completely avoid the problem of water dripping, the water supply assembly further includes a one-way valve 75. The one-way valve 75 is arranged on the water supply pipe 71 and is located between the water purifying filter 1 and the water outlet spout 53.

Since the one-way valve 75 itself has a certain opening pressure, in a normal working state, the one-way valve 75 can be opened only when a certain pressure exists upstream of the one-way valve 75, i.e. when the pump 52 is turned off, once the pressure upstream of the one-way valve 75 decreases to the opening pressure of the one-way valve 75, the water outlet spout 53 can stop discharging water, and the residual water in the water supply pipe 71 is discharged by pressure relief by the pressure relief pipe 74, such that the water outlet spout 53 can stop discharging water as soon as possible, and water dripping can be completely avoided.

In order to ensure the maximum effect of the one-way valve 75, the one-way valve 75 is adjacent to the water outlet spout 53. When the device adjacent to the water outlet spout 53 is the water purifying filter, the one-way valve 75 is located between the water purifying filter and the water outlet spout 53; and when the water supply pipe 71 is provided with a sterilization device and the device adjacent to the water outlet spout 53 is the sterilization device, the one-way valve 75 is located between the sterilization device and the water outlet spout 53.

In the examples shown in Figs. 21 and 22, the water purifying filter 1 is located downstream of the pump 52, and the first end 741 of the pressure relief pipe 74 is connected with the water supply pipe 71 between the pump 52 and the water purifying filter 1, so as to discharge water pressure between the pump 52 and the water purifying filter 1, so as to avoid water dripping from the water outlet spout 53.

In addition, the one-way valve 75 is provided on the water supply pipe 71 downstream of the pressure relief pipe 74, such that the water discharge from the water outlet spout 53 can be stopped as soon as possible, and water dripping from the water outlet spout 53 can be avoided.

Specifically, the water supply pipe 71 includes a first water supply pipe section 713 located between the water inlet end and the pump 52, a second water supply pipe section 714 located between the pump 52 and the water purifying filter 1, and a third water supply pipe section 715 located between the water purifying filter 1 and the water outlet spout 53, the first end 741 of the pressure relief pipe 74 being connected with the second water supply pipe section 714, and the second end 742 of the pressure relief pipe 74 being connected with the first water supply pipe section 713.

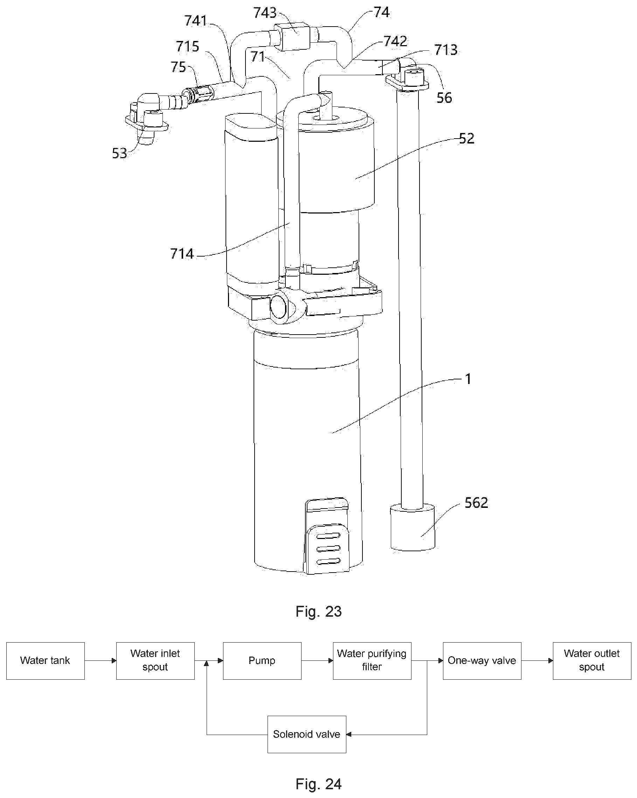

In the examples of Figs. 23 and 24, the water purifying filter 1 is located downstream of the pump 52, and the first end 741 of the pressure relief pipe 74 is connected with the water supply pipe 71 between the water purifying filter 1 and the water outlet spout 53, so as to relieve water pressure between the water purifying filter 1 and the water outlet spout 53; and water between the water purifying filter 1 and the water outlet spout 53 can be relieved via the pressure relief pipe 74, so as to prevent water dripping from the water outlet spout 53.

In addition, the one-way valve 75 is provided on the water supply pipe 71 downstream of the pressure relief pipe 74, such that water discharge from the water outlet spout 53 can be stopped as soon as possible, and water dripping from the water outlet spout 53 can be avoided.

Specifically, the water supply pipe 71 includes a first water supply pipe section 713 located between the water inlet end and the pump 52, a second water supply pipe section 714 located between the pump 52 and the water purifying filter 1, and a third water supply pipe section 715 located between the water purifying filter 1 and the water outlet spout 53, the first end 741 of the pressure relief pipe 74 being connected with the third water supply pipe section 715, and the second end 742 of the pressure relief pipe 74 being connected with the first water supply pipe section 713.

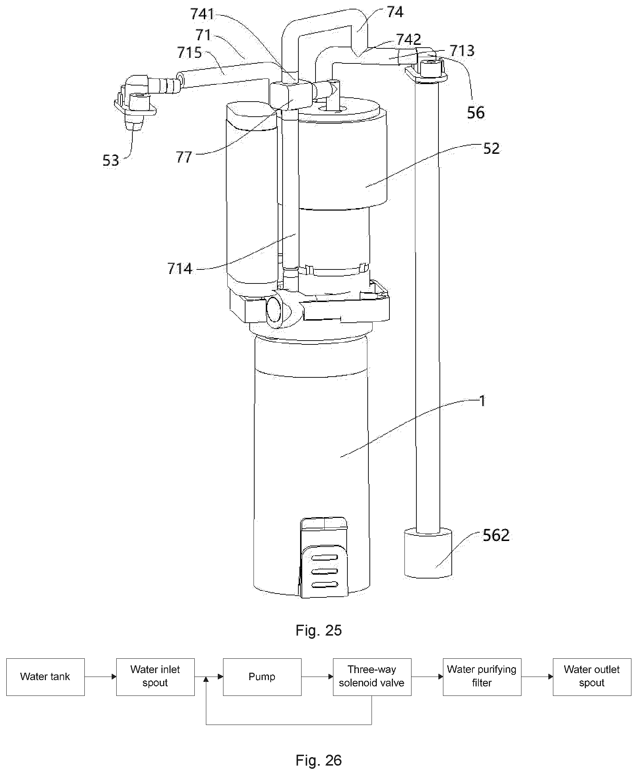

Different from the examples hereinabove, in Figs. 25 to 28, the electric control valve is a three-way solenoid valve 77.

Of course, in other embodiments not shown, the electric control valve here may also be a three-way electric valve. All types of three-way valves for which opening and closing control can be realized by energization falls within the scope of protection of the present invention.

Specifically, the three-way solenoid valve 77 is configured to open the water supply pipe 71 and close the pressure relief pipe 74 when the pump 52 is turned on, and close the water supply pipe 71 and open the pressure relief pipe 74 when the pump 52 is turned off. When the pump 52 is turned on, the water supply pipe 71 is in an open state and the pressure relief pipe 74 is in a closed state, so that water flows out from the water supply pipe 71 via the water outlet spout 53, realizing water discharge of the water supply assembly, and water discharge of the water supply assembly being not affect the pressure relief pipe 74; when the pump 52 is turned off, the water supply pipe 71 is in a closed state and the pressure relief pipe 74 is in a pressure relief state, so as to relieve pressure of the water supply pipe 71 via the pressure relief pipe 74; and when the pump 52 is turned off, the water supply pipe 71 is closed, and pressure of the water supply pipe 71 is relieved via the pressure relief pipe 74, so that no water drips from the water outlet spout 53.

The three-way solenoid valve 77 is arranged between the pump 52 and the water purifying filter 1, or is arranged between the water purifying filter 1 and the water outlet spout 53.

The three-way solenoid valve 77 is connected with the first end 741 of the pressure relief pipe 74, the second end 742 of the pressure relief pipe 74 is connected between the water inlet end and the pump 52, or the second end 742 of the pressure relief pipe 74 is in communication with a water source.

In the example of Figs 25 and 26, the water purifying filter 1 is located downstream of the pump 52, and the three-way solenoid valve 77 is connected with the water supply pipe 71 between the pump 52 and the water purifying filter 1. That is, the three-way solenoid valve 77 is connected with the second water supply pipe section 714.

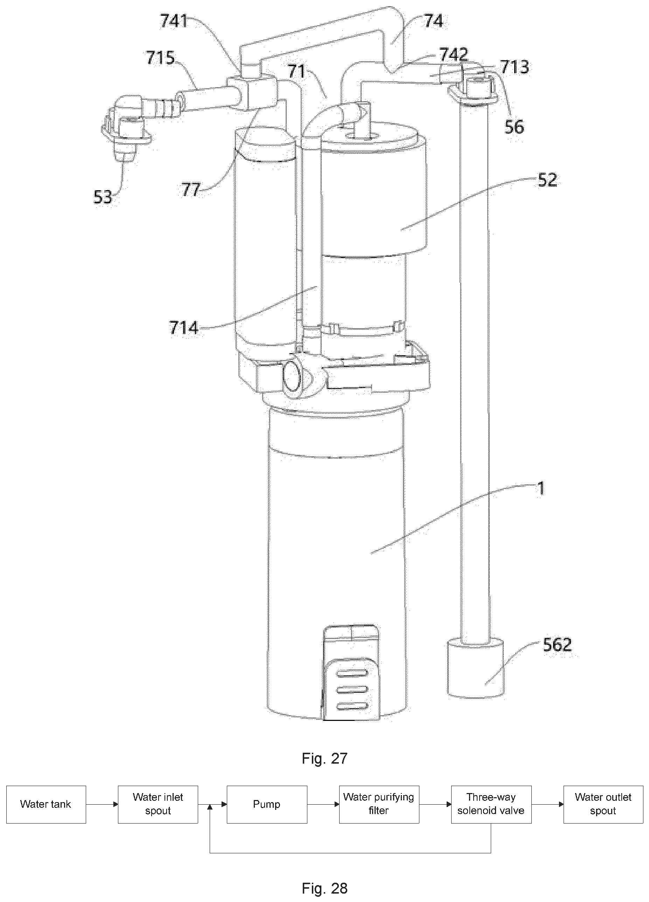

In the examples of Figs. 27 and 28, the water purifying filter 1 is located downstream of the pump 52, and the three-way solenoid valve 77 is connected with the water supply pipe 71 between the water purifying filter 1 and the water outlet spout 53. That is, the three-way solenoid valve 77 is connected with the third water supply pipe section 715.

By the three-way solenoid valve 77, the water supply pipe 71 can be closed, avoiding water dripping from the water supply pipe 71, and the pressure relief pipe 74 can be opened while closing the water supply pipe 71, avoiding the situation where the water supply pipe 71 cannot be opened due to excessively large back pressure of the three-way solenoid valve 77, and avoiding the problem of water being stuck in the water path and unconfigured to optionally be discharged.

In some other embodiments, the three-way solenoid valve 77 is connected with the second end 742 of the pressure relief pipe 74.

The water supply assembly further includes a sterilization device. A sterilization device 76 is provided on the water supply pipe 71, and is used for sterilizing water in the water supply pipe 71, so as to ensure that water discharged from the water outlet spout 53 is clean and sanitary.

The sterilization device 76 includes a first sterilization device 761, a second sterilization device 762, and a third sterilization device 763.

It should be noted that, in actual use of the product, one of the first sterilization device 761, the second sterilization device 762, and the third sterilization device 763 may be selected to be provided as needed, or two or three may be selected to be provided in combination, and the specific arrangement manner may be selected according to the requirements for the product and an installation space.

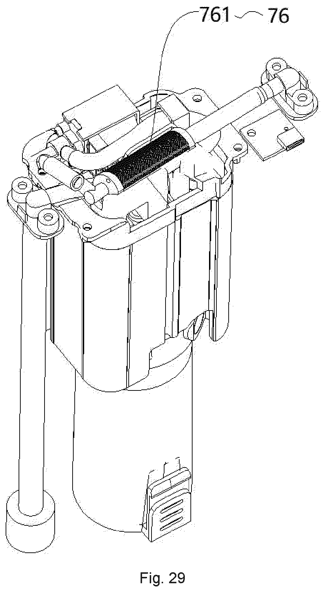

In the example of Fig. 29, the first sterilization device 761 is located on the water supply pipe 71 between the water outlet spout 53 and the water purifying filter 1.

Of course, the sterilization device 76 may be located at other positions of the water supply pipe 71.

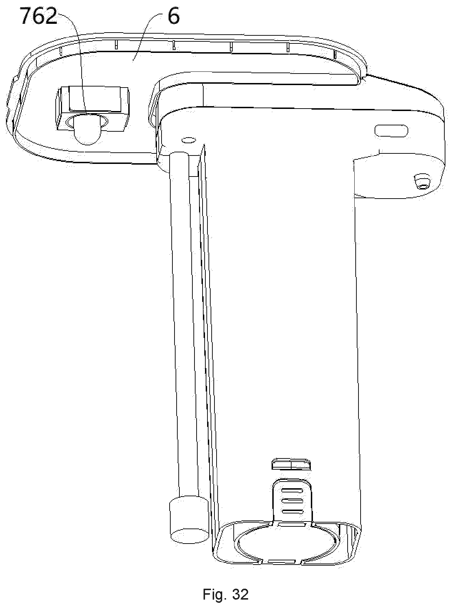

In the example shown in Fig. 32, the second sterilization device 762 may be further provided on the upper cover 6 of the water tank, and the second sterilization device 762 is an ultraviolet sterilization device, so as to kill bacteria and viruses in the water tank and avoid the growth of green algae.

In the example shown in Fig. 33, a third sterilization device 763 is provided in the installation space between the water supply device housing 51 and a water supply upper cover 782; the third sterilization device 763 is an ultraviolet sterilization device; a part of the water supply pipe 71 corresponding to the third sterilization device 763 is transparent; and the third sterilization device 763 kills bacteria and viruses in water which flows through the water supply pipe 71.

For example, the third sterilization device 763 is located on the circuit board, the third sterilization device 763 is opposite to a part of the water supply pipe 71, the water supply pipe 71 is provided with a transparent portion 716 opposite to the third sterilization device 763, and light of the third sterilization device 763 is transmitted through the transparent portion 716 to sterilize water in the water supply pipe 71.

Of course, a bacteriostatic effect can be achieved by adding bacteriostatic ingredients such as adding a bacteriostatic material into a water tank injection-molding part or adding a bacteriostatic material into a water purifying filter of the water purifying filter.

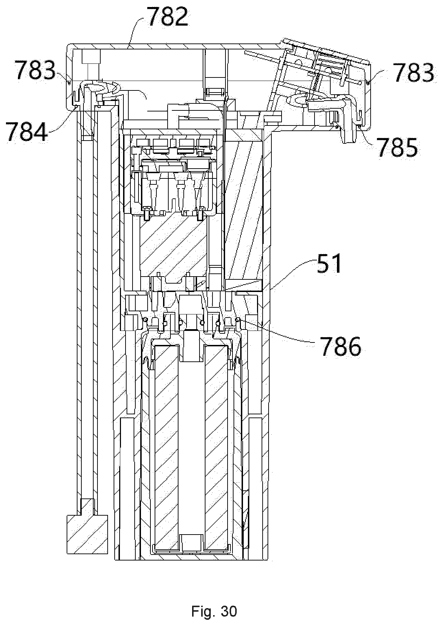

As shown in Fig. 30, the water supply assembly further includes the water supply device housing 51 and the water supply upper cover 782, both the pump 52 and the water purifying filter 1 are located in the water supply device housing 51, and the water supply upper cover 782 is used for closing the top end of the water supply device housing 51. In order to ensure the sealing performance, a first sealing element 783 is provided between the water supply upper cover 782 and the water supply device housing 51.

A part of the first water supply pipe section 713 of the water supply pipe 71 extends out of the water supply device housing 51, and the part of the water supply pipe 71 at which the first water supply pipe section 713 is fitted with the water supply device housing 51 is sealed by a second sealing element 784.

The water outlet spout 53 extends out of the water supply device housing 51, and the part at which the water outlet spout 53 is fitted with the water supply device housing 51 is sealed by a third sealing element 785.

The part at which the connector of the water purifying filter 1 is fitted with the inner wall of the water supply device housing 51 is sealed by a fourth sealing element 786.

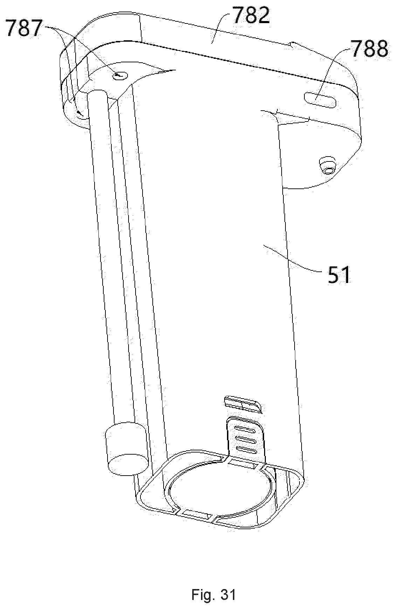

As shown in Fig. 31, screw-hole silicone rubber plugs 787 are further provided at fitting screw holes of the water supply device housing 51, and a charging interface silicone rubber plug 788 is provided at a charging interface of the water supply device housing 51.

By means of the described sealing means, electronics in the water supply device housing 51 and the water supply upper cover 782 are sealed and protected.

### Embodiment 2:

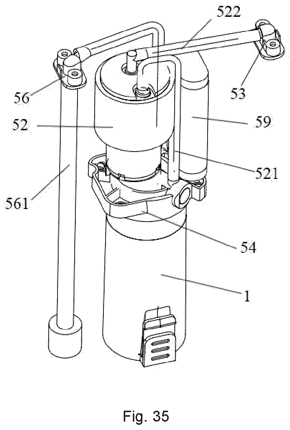

Embodiment 2 differs from embodiment 1 in that:
As shown in Fig. 35, this embodiment provides a water supply assembly, the water supply assembly including a pump 52, a water outlet spout 53, a water inlet spout 56, and a filter module. The pump 52 is connected with a pump water inlet pipe 521 and a pump water outlet pipe 522; in the height direction of the water supply assembly, both the water outlet spout 53 and the water inlet spout 56 are located on the upper portion of the water supply assembly; the filter module is connected with the pump 52; and a water inlet of the filter module is in communication with the water inlet spout 56, a water outlet of the filter module is in communication with the pump water inlet pipe 521, and the pump water outlet pipe 522 is in communication with the water outlet spout 53.

In the present embodiment, the pump 52 and the filter module are integrated to form the water supply assembly, and the structure of water path connection between the filter module and the pump 52 is simple, facilitating assembly, and providing a high degree of integration and a compact structure.

Further, the water supply assembly is formed by integrating the pump and the filter module, such that the water supply assembly can be used flexibly, and can be arranged as needed in a scenario where a water source is provided and filtering is required, improving the applicability of the water supply assembly.

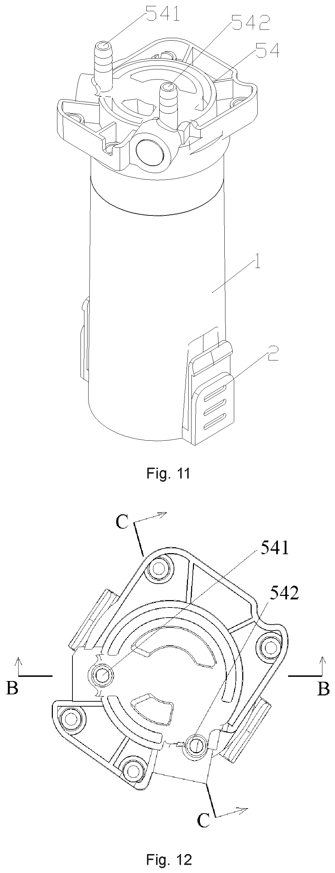

As shown in Figs. 11 and 35, in this embodiment, the filter module includes a water purifying filter 1 and a water purifying filter connector 54, the water purifying filter 1 being detachably connected with the water purifying filter connector 54; the water purifying filter connector 54 includes a water purifying filter connector water inlet 541 and a first water outlet in communication with each other, and a second water inlet and a water purifying filter connector water outlet 542 in communication with each other; the water purifying filter 1 includes a water purifying filter water inlet and a water purifying filter water outlet; when the water purifying filter 1 is mounted on the water purifying filter connector 54, the water inlet spout 56 is in communication with the water purifying filter connector water inlet 541, the first water outlet is in communication with the water purifying filter water inlet, the water purifying filter water outlet is in communication with the second water inlet, the water purifying filter connector water outlet 542 is in communication with the pump water inlet pipe 521, and the pump water outlet pipe 522 is in communication with the water outlet spout 53.

Other structures of this embodiment are the same as those of embodiment 1, and are not repeatedly described herein.

The above is only preferred embodiments of the present invention and is not intended to limit the present invention. A person skilled in the art may make various modifications and variations. Any modifications, equivalent replacements, improvements, etc. made within the spirit and principle of the present invention shall all fall within the scope of protection of the present invention.

## Claims

1. A water purifying filter, comprising a filter housing and a filter element, wherein the filter housing is provided with a snap-fitting member, the snap-fitting member is provided with a snap-fitting portion, the snap-fitting member is provided with a first snap-fitting installation structure, a gap is formed between the snap-fitting portion and a sidewall of the filter housing, and the snap-fitting portion is configured to elastically deflect towards the sidewall of the filter housing and be reset.

2. The water purifying filter according to claim 1, wherein a clearance recess for providing clearance for the snap-fitting member is provided on the filter housing at a position corresponding to the snap-fitting member.

3. The water purifying filter according to claim 1, wherein the snap-fitting member comprises a connecting portion for connecting the filter housing with the snap-fitting portion, the connecting portion being arranged at an angle with respect to the .

4. The water purifying filter according to claim 3, wherein the connecting portion is provided on the sidewall of the filter housing at a position close to an end portion of the filter housing.

5. The water purifying filter according to any one of claims 1 to 4, wherein a force applying region is provided on the snap-fitting portion.

6. The water purifying filter according to claim 5, wherein the snap-fitting member comprises a connecting portion for connecting the filter housing with the snap-fitting portion, and the force applying region is located between the first snap-fitting installation structure and the connecting portion.

7. A water supply assembly, comprising a water supply device housing and a water purifying filter located in the water supply device housing, wherein the water purifying filter is the water purifying filter according to any one of claims 1 to 6, and a second snap-fitting installation structure cooperating with the first snap-fitting installation structure is provided on an inner side of the water supply device housing.

8. The water supply assembly according to claim 7, wherein a force applying region is provided on the snap-fitting portion, and a through hole or a notch groove for exposing the force applying region is provided on the water supply device housing.

9. The water supply assembly according to claim 8, wherein the water supply assembly comprises a water outlet spout, and a plurality of water outlet ribs are provided in the water outlet spout.

10. A water purifier, comprising a water tank and a water supply assembly, wherein the water supply assembly is the water supply assembly according to claim 8 or 9.

11. A water supply assembly, comprising:
a water supply device housing;
a pump module, connected with a pump water inlet pipe and a pump water outlet pipe; and
a water outlet spout,
wherein the water supply assembly further comprises:
a filter module, provided in the water supply device housing, a water inlet of the filter module being connected with the pump water outlet pipe, and a water outlet of the filter module being connected with the water outlet spout.

12. The water supply assembly according to claim 11, wherein the filter module comprises the water purifying filter according to any one of claims 1 to 6.

13. The water supply assembly according to claim 11 or 12, wherein the filter module comprises a water purifying filter and a water purifying filter connector; the water purifying filter is detachably mounted in the water supply device housing and is connected with the water purifying filter connector; the water purifying filter connector comprises a water purifying filter connector water inlet and a water purifying filter connector water outlet, the water purifying filter connector water inlet being connected with the pump water outlet pipe, and the water purifying filter connector water outlet being connected with the water outlet spout; the water purifying filter comprises a water purifying filter water inlet and a water purifying filter water outlet; when the water purifying filter is mounted in the water supply device housing, the water purifying filter water inlet is in communication with the water purifying filter connector water inlet, and the water purifying filter water outlet is in communication with the water purifying filter connector water outlet.

14. The water supply assembly according to claim 13, wherein the pump module is disposed within the water supply device housing and stacked with the filter module.

15. The water supply assembly according to claim 13, wherein a water purifying filter connector support portion for supporting the water purifying filter connector is provided in the water supply device housing.

16. The water supply assembly according to claim 15, wherein the water purifying filter connector support portion comprises a cylindrical portion, the water purifying filter connector is provided with an annular recess, a sealing ring is provided in the annular recess, and the water purifying filter connector support portion is sealingly connected with the sealing ring.

17. The water supply assembly according to claim 11 or 12, wherein the water supply assembly further comprises a control module which is provided above the pump module.

18. The water supply assembly according to claim 11 or 12, wherein the pump module comprises a fixing member and a pump, the fixing member being mounted in the water supply device housing; and the fixing member comprises a pump receiving cavity, and the pump is located in the pump receiving cavity.

19. The water supply assembly according to claim 18, wherein the pump module further comprises a battery, the battery is electrically connected with the pump, the fixing member is further provided with a battery receiving cavity, and the battery is located in the battery receiving cavity.

20. The water supply assembly according to claim 11 or 12, wherein a support portion is provided in the water supply device housing, the water supply assembly further comprises a pressing plate, the pressing plate is mounted on the water supply device housing, and in an axial direction of the water supply device housing, the pressing plate and the support portion position the pump module in the water supply device housing.

21. The water supply assembly according to claim 13, wherein the water purifying filter is snap-fitted with the water supply device housing, or the water purifying filter is connected with the water purifying filter connector by threads.

22. The water supply assembly according to claim 13, wherein a sterilization device is provided between the water purifying filter connector water outlet and the water outlet spout.

23. A water purifier, comprising a water tank and a water supply assembly, wherein the water supply assembly is the water supply assembly according to any one of claims 11 to 22.

24. The water purifier according to claim 23, wherein the water tank comprises a mounting portion and a containing portion, the water supply assembly is detachably connected with the mounting portion, the containing portion contains raw water, and the pump water inlet pipe is configured to draw the raw water from the containing portion.

25. The water purifier according to claim 23, wherein at least a part of the water supply assembly is disposed within the water tank, the water purifier further comprises an upper cover, and the upper cover covers an upper opening of the water tank and covers a top of the at least the part of the water supply assembly.

26. The water purifier according to claim 23, wherein the water purifier is provided with a handle.

27. A water supply assembly, wherein the water supply assembly comprises:
a pump, connected with a pump inlet pipe and a pump outlet pipe;
a water outlet spout and a water inlet spout, in a height direction of the water supply assembly, both the water outlet spout and the water inlet spout being located on an upper portion of the water supply assembly;
a filter module, connected with the pump, wherein
a water inlet of the filter module is in communication with the water inlet spout, a water outlet of the filter module is in communication with the pump inlet pipe, and the pump outlet pipe is in communication with the water outlet spout.

28. The water supply assembly according to claim 27, wherein the filter module comprises the water purifying filter according to any one of claims 1 to 6.

29. The water supply assembly according to claim 27 or 28, wherein the water supply assembly further comprises a water supply device housing, and the water outlet spout and the water inlet spout are located on two sides of the water supply device housing respectively.

30. The water supply assembly according to claim 29, wherein the water supply device housing has a T shape as a whole, and the water inlet spout and the water outlet spout are located at two ends of a transverse part of the T shape respectively.

31. The water supply assembly according to claim 27 or 28, wherein the filter module comprises a water purifying filter and a water purifying filter connector, the water purifying filter being detachably connected with the water purifying filter connector; the water purifying filter connector comprises a water purifying filter connector water inlet and a first water outlet which are in communication with each other, and a second water inlet and a water purifying filter connector water outlet which are in communication with each other; the water purifying filter comprises a water purifying filter water inlet and a water purifying filter water outlet; when the water purifying filter is mounted on the water purifying filter connector, the water inlet spout is in communication with the water purifying filter connector water inlet, the first water outlet is in communication with the water purifying filter water inlet, the water purifying filter water outlet is in communication with the second water inlet, and the water purifying filter connector water outlet is in communication with the pump inlet pipe.

32. A water purifier, comprising a water tank and a water supply assembly, the water supply assembly being detachably connected with the water tank, wherein the water supply assembly is the water supply assembly according to any one of claims 27 to 31.

33. The water purifier according to claim 32, wherein the water tank comprises a mounting portion and an containing portion, the mounting portion comprises a sidewall, the sidewall and an inner wall of the water tank define an installation space for the water supply assembly, and an upper edge of the sidewall and/or an upper edge of the inner wall of the water tank are used for supporting the water supply assembly.

34. The water purifier according to claim 32, wherein the water tank comprises a mounting portion and an containing portion, the mounting portion comprises a sidewall, the sidewall and an inner wall of the water tank define an installation space for the water supply assembly, and the bottom of the water tank is used for supporting the water supply assembly.

35. A water supply assembly, comprising:
a water supply pipe, being provided with a water inlet end and a water outlet end, the water inlet end being used for connecting with a water source, and the water outlet end forming a water outlet spout or connecting with a water outlet spout;
a pump and a water purifying filter, both being provided on the water supply pipe, the pump being arranged close to the water inlet end relative to the water purifying filter; and
a pressure relief pipe, connected with the water supply pipe, the pressure relief pipe being configured to be in a pressure relief state when the pump is turned off so as to relieve at least a part of a pressure in the water supply pipe.

36. The water supply assembly according to claim 35, wherein the water purifying filter is the water purifying filter according to any one of claims 1 to 6.

37. The water supply assembly according to claim 35 or 36, wherein the water supply assembly further comprises an electric control valve, the electric control valve is located on the pressure relief pipe, and the pressure relief pipe is connected in parallel to the water supply pipe.

38. The water supply assembly according to claim 35 or 36, wherein a first end of the pressure relief pipe is connected between the pump and the water purifying filter, and a second end of the pressure relief pipe is connected between the water inlet end and the pump, or a second end of the pressure relief pipe is in communication with the water source.

39. The water supply assembly according to claim 35 or 36, wherein a first end of the pressure relief pipe is connected between the water purifying filter and the water outlet spout, and a second end of the pressure relief pipe is connected between the water inlet end and the pump, or a second end of the pressure relief pipe is in communication with the water source.

40. The water supply assembly according to claim 38 or 39, wherein the water supply assembly further comprises a one-way valve which is arranged on the water supply pipe and is located between the water purifying filter and the water outlet end.

41. The water supply assembly according to claim 35 or 36, wherein the water supply pipe is connected with the pressure relief pipe by the electric control valve, the electric control valve is a three-way valve, and the electric control valve is configured to open the water supply pipe and close the pressure relief pipe when the pump is turned on, and close the water supply pipe and open the pressure relief pipe when the pump is turned off.

42. The water supply assembly according to claim 41, wherein the electric control valve is arranged between the pump and the water purifying filter, or the electric control valve is arranged between the water purifying filter and the water outlet spout.

43. The water supply assembly according to claim 42, wherein the electric control valve is connected with a first end of the pressure relief pipe, and a second end of the pressure relief pipe is connected between the water inlet end and the pump, or a second end of the pressure relief pipe is in communication with the water source.

44. A water purifier, comprising a water tank and a water supply assembly, wherein the water supply assembly is the water supply assembly according to any one of claims 35 to 43.
